# EUROPÄISCHE PATENTSCHRIFT

(11) **EP 0 846 233 B1**
(45) Veröffentlichungstag und Bekanntmachung des Hinweises auf die Patenterteilung: **11.04.2001**
(21) Anmeldenummer: 96929289.5
(22) Anmeldetag: 20.08.1996
(51) Int. Cl.: F16D 3/78, F16D 3/76

(54) **SCHWINGUNGSDÄMPFENDES TORSIONSELASTISCHES WELLENGELENK, INSBESONDERE FÜR DEN ANTRIEBSSTRANG VON KRAFTFAHRZEUGEN**
VIBRATION-DAMPING TORSIONALLY ELASTIC CARDAN JOINT, ESPECIALLY FOR THE DRIVE TRAIN OF MOTOR VEHICLES
JOINT DE CARDAN ELASTIQUE EN TORSION, ABSORBEUR DE VIBRATIONS, NOTAMMENT POUR LA TRANSMISSION DE VEHICULES

(30) Priorität: 24.08.1995 DE 19531201
(43) Veröffentlichungstag der Anmeldung: 10.06.1998
(73) Patentinhaber: SGF SÜDDEUTSCHE GELENKSCHEIBENFABRIK GMBH & CO. KG., 84478 Waldkraiburg (DE)
(72) Erfinder: ANDRÄ, Rainer, D-65554 Limburg (DE); SCHNEIDER, Wilfried, D-84478 Waldkraiburg (DE)
(74) Vertreter: Goetz, Rupert, Dipl.-Ing.
(86) Internationale Anmeldenummer: EP9603664
(87) Internationale Veröffentlichungsnummer: WO9708472

(56) Entgegenhaltungen:
- EP-A- 0 245 668
- EP-A- 0 463 462
- DE-A- 2 534 684
- DE-B- 1 266 578
- DE-C- 3 942 432
- FR-A- 2 331 713
- FR-A- 2 448 068
- US-A- 5 152 718

## Beschreibung

Die Erfindung betrifft ein Wellengelenk nach dem Oberbegriff des Patentanspruchs 1.

Wellengelenke dieser Gattung sind aus FR-A- 2 331 713 bekannt.

Der Erfindung liegt die Aufgabe zugrunde, ein schwingungsdämpfendes torsionselastisches Wellengelenk derart zu gestalten, daß es die Fähigkeit erhält, in einem Antriebsstrang kleinamplitudige Schwingungen bei kleinen Drehmomenten zu entkoppeln.

Die Aufgabe ist erfindungsgemäß mit den Merkmalen des Anspruchs 1 gelöst.

Im folgenden werden Ausführungsbeispiele der Erfindung anhand schematischer Zeichnungen beschrieben. In den Zeichnungen zeigen:
- Fig.1: eine erste Ausführungsform eines erfindungsgemäßen Wellengelenks im Schnitt I-I in Fig.2,
- Fig.2: die Stirnansicht in Richtung des Pfeils II in Fig.1,
- Fig.3: eine zweite Ausführungsform eines erfindungsgemäßen Wellengelenks im Schnitt III-III in Fig.4, und
- Fig.4: die Stirnansicht in Richtung des Pfeils IV in Fig.3.

Jedes der dargestellten Wellengelenke ist dazu vorgesehen, als Bestandteil eines Antriebsstrangs eines Kraftfahrzeugs verwendet, insbesondere zwischen einer Schaltkupplung und einem Differentialgetriebe eingebaut zu werden.

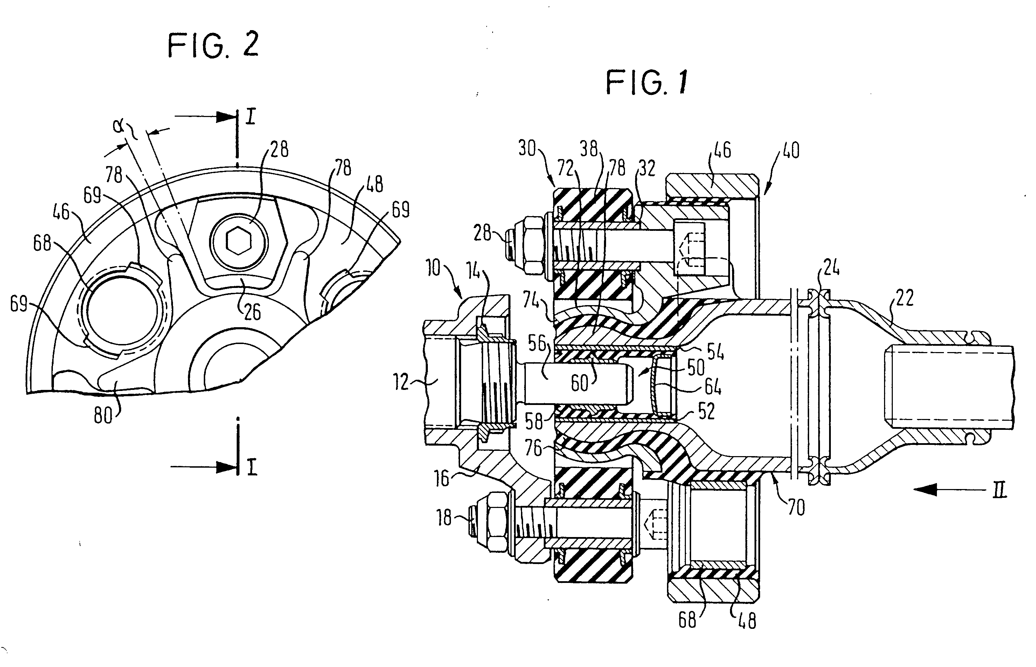

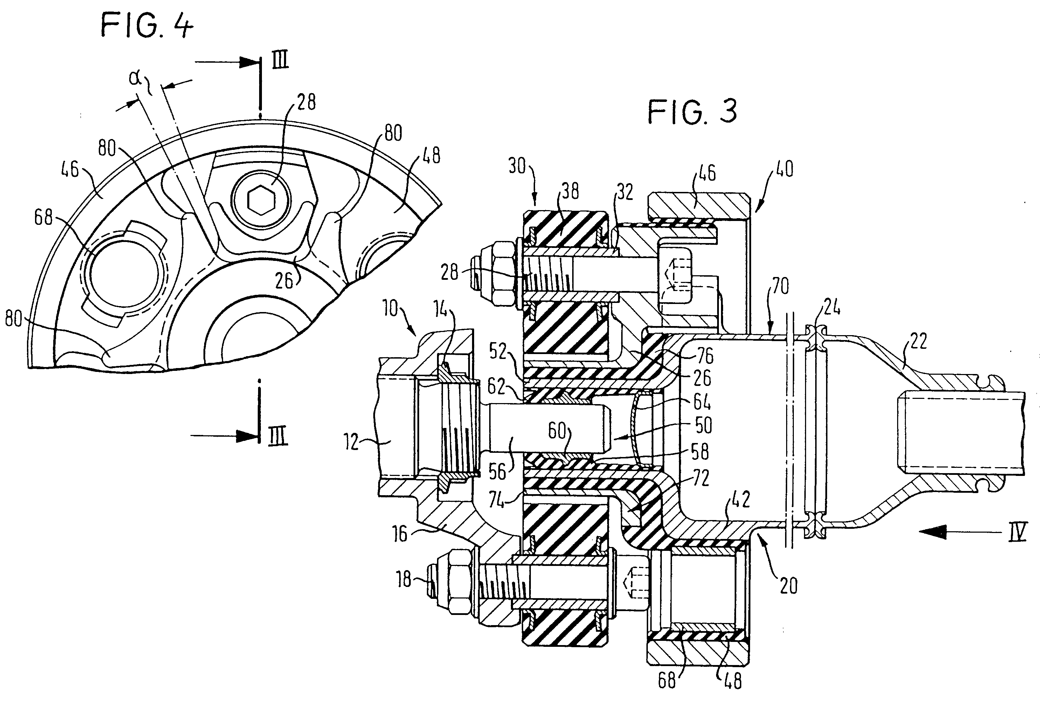

Solche Wellengelenke haben bekanntermaßen einen ersten Flansch 10, der auf eine erste Welle 12 aufgesteckt, an dieser mit einer Mutter 14 befestigt ist und mehrere, üblicherweise drei, Arme 16 zum Aufnehmen je eines Gewindebolzens 18 aufweist. Dem ersten Flansch 10 steht in einem axialen Abstand ein zweiter Flansch 20 gegenüber, der sich an einer zweiten Welle 22, beispielsweise einem Halbwellenrohr der in Fig.1 und 3 dargestellten Art, befestigen läßt, beispielsweise mit einer Reibschweißung 24. Der zweite Flansch 20 weist ebenfalls drei Arme 26 zum Aufnehmen je eines Gewindebolzens 28 auf.

Zwischen den beiden Flanschen 10 und 20 ist eine übliche Gelenkscheibe 30 angeordnet, die sechs achsparallele Buchsen 32 für je einen der Gewindebolzen 18 bzw. 28 aufweist. Die Buchsen 32 können unmittelbar von sie paarweise miteinander verbindenden Fadenwickeln umschlungen oder in verhältnismäßig weichen Gummi 34 eingebettet und von je einer äußeren Buchse umgeben sein, wobei dann diese äußeren Buchsen paarweise von Fadenwickeln umschlungen sein können. Im übrigen besteht die Gelenkscheibe 30 aus Gummi 38.

Am zweiten Flansch 20 ist ein Tilgerkragen 42 eines Drehschwingungstilgers 40 ausgebildet. Der Drehschwingungstilger 40 hat eine ringförmige Schwungmasse 46, die den Tilgerkragen 42 umgibt und an diesem in üblicher Weise durch eine anvulkanisierte Gummifederanordnung 48 befestigt ist.

Die beiden Wellen 12 und 22 sind durch die sie miteinander verbindende Gelenkscheibe 30 alleine nicht für alle Zwecke hinreichend genau gegenseitig zentriert. Um die Notwendigkeit einer Zentrierung mittels aufwendiger Lagerungen der Wellen 12 und 22 zu vermeiden, ist eine Zentriervorrichtung 50 vorgesehen. Zu dieser gehört gemäß Fig.1 eine Zentrierhülse 52, die in eine im zweiten Flansch 20 ausgebildete zylindrische Paßfläche 54 eingepreßt ist und einen an der Welle 12 ausgebildeten zapfenförmigen Zentrierkörper 56 mit radialem Abstand umschließt. An der Innenwand der Zentrierhülse 52 ist eine Gummifederanordnung 58 befestigt, insbesondere anvulkanisiert, und diese umschließt eine Büchse 60 aus selbstschmierendem Material, beispielsweise Sintermetall, die den Zentrierkörper 56 axial verschiebbar führt. An der Gummifederanordnung 58 ist eine dem ersten Flansch 10 zugewandte Dichtlippe 62 (Fig.3) ausgebildet, die gegen den Zentrierkörper 56 abdichtet; nahe dem entgegengesetzten Ende der Zentriervorrichtung 50 ist die Zentrierhülse 52 mit einem eingepreßten Deckel 64 verschlossen. Der auf diese Weise abgeschlossene Raum innerhalb der Zentrierhülse 52 ist mit Schmiermittel gefüllt.

In die Gummifederanordnung 48 des Drehschwingungstilgers 40 können Abstandhalter 68, beispielsweise in Form achsparalleler Hülsen, eingebettet sein, mit denen sich radiale Auslenkungen der Schwungmasse 46 gegenüber dem Tilgerkragen 42 auf ein Minimum begrenzen und die Drehschwingungseigenschaften des Tilgers in gewünschter Weise beeinflussen lassen. Zum letzgenannten Zweck können an die Abstandhalter 68 in Umfangsrichtung des Drehschwingungstilgers 40 angrenzend Hohlräume 69 in der Gummifederanordnung 48 vorgesehen sein.

Bei dem Wellengelenk gemäß Fig.1 und 2 bildet der Drehschwingungstilger 40 mit dem zweiten Flansch 20 eine Baueinheit, während die Zentriervorrichtung 50 ein gesondertes, erst nachträglich eingesetztes Bauteil ist. Der zweite Flansch 20 ist gemäß Fig.1 und 2 in einen Primärteil 70 und einen mit ihm gleichachsigen Sekundärteil 72 unterteilt, wobei der Primärteil 70 zur Befestigung an der zugehörigen Welle 22, beispielsweise mittels Reibschweissung 24, ausgebildet ist und den Tilgerkragen 42 zum Anvulkanisieren der Gummifederanordnung 48 sowie die Paßfläche 54 zum Einpressen der Zentrierhülse 52 aufweist, während am Sekundärteil 72 ein Kragen 74 ausgebildet ist, der durch eine anvulkanisierte Gummifederanordnung 76 mit einem die Paßfläche 54 aufweisenden Zentrierkragen 78 des Primärteils 70 verbunden ist. Die einander gegenüberliegenden Flächen der beiden Kragen 74 und 78 und die an ihnen haftende, vorzugsweise anvulkanisierte, Gummifederanordnung 76 sind sphärisch gestaltet, so daß sie eine verhältnismäßig große Winkelauslenkung der beiden Wellen 12 und 22 in bezug zueinander ermöglichen. Das Sekundärteil 72 weist die drei Arme 26 auf, an denen mittels je eines Gewindebolzens 28 je eine Buchse 32 der Gelenkscheibe 30 befestigt ist.

Die Gummifederanordnung 76 ermöglicht außerdem begrenzte Relativdrehungen des Primärteils 70 gegenüber dem Sekundärteil 72 und dient somit der Entkopplung kleinamplitudiger Schwingungen im Antriebsstrang bei kleinen Drehmomenten. Jeder der am Sekundärteil 72 ausgebildeten Arme 26 ist zwischen zwei am Primärteil 70 ausgebildeten, gabelförmig radial nach außen ragenden Anschlägen 80 derart aufgenommen, daß die möglichen Relativdrehungen zwischen Primärteil 70 und Sekundärteil 72 auf einen Winkel a von beispielsweise 1 bis 2° begrenzt sind. Die Gummifederanordnung 76 ermöglicht es, eine verhältnismäßig einfach gestaltete Gelenkscheibe 30 der in Fig. 1 und 3 dargestellten Art zu verwenden, bei der die Buchsen 32 unmittelbar in den Gummi 38 eingebettet sind.

Das Wellengelenk gemäß Fig.3 und 4 unterscheidet sich von dem in Fig.1 und 2 dargestellten dadurch, daß der wiederum in ein Primärteil 70 und ein Sekundärteil 72 mit an beide anvulkanisierter Gummifederanordnung 76 unterteilte Flansch 20 nicht nur mit dem Drehschwingungstilger 40 sondern auch mit der Zentrierung 50 eine Baueinheit bildet. Gemäß Fig.3 und 4 sind die Kragen 74 und 78 und die Gummifederanordnung 76 zylindrisch; sie könnten aber ebenso wie in Fig.1 und 2 sphärisch gewölbt sein.

## Patentansprüche

1. Schwingungsdämpfendes torsionselastisches Wellengelenk, insbesondere für den Antriebsstrang von Kraftfahrzeugen, mit
- einem ersten und einem zweiten Flansch (10, 20) die zum Befestigen an je einer Welle (12, 22) ausgebildet sind,
- einer Gelenkscheibe (30), die zwischen den beiden Flanschen (10, 20) angeordnet und in Winkelabständen abwechselnd an je einem von ihnen befestigt ist,
- einem Drehschwingungstilger (40), der einen mit dem zweiten Flansch (20) starr verbundenen Tilgerkragen (42), eine Schwungmasse (46) und eine an dem Tilgerkragen (42) und der Schwungmasse (46) haftende, insbesondere anvulkanisierte, Gummifederanordnung (48) aufweist, und
- einer Zentriervorrichtung (50), die einen mit dem zweiten Flansch (20) starr verbundenen Zentrierkragen (78), einen mit dem ersten Flansch (10) starr verbundenen Zentrierkörper (56) und eine am Zentrierkragen (78) haftende, insbesondere anvulkanisierte, Gummifederanordnung (58) aufweist,
dadurch gekennzeichnet, daß
- der zweite Flansch (20) in einen Primärteil (70) und einen Sekundärteil (72) unterteilt ist, die durch eine Gummifederanordnung (76) miteinander verbunden sind,
- der Primärteil (70) zum Befestigen an der zugehörigen Welle (22) ausgebildet ist und mindestens einen der Kragen (42, 78) aufweist, und
- der Sekundärteil (72) über die Gelenkscheibe (30) mit dem ersten Flansch (10) verbunden ist.

2. Wellengelenk nach Anspruch 1,
dadurch gekennzeichnet, daß
- das Primärteil (70) und das Sekundärteil (72) je einen Kragen (74 bzw. 78) aufweist und
- die Gummifederanordnung (76) zwischen diesen Kragen (74, 78) liegt.

3. Wellengelenk nach Anspruch 2,
dadurch gekennzeichnet, daß die Kragen (74, 78) und die zwischen ihnen liegende Gummifederanordnung (76) zylindrisch sind.

4. Wellengelenk nach Anspruch 2,
dadurch gekennzeichnet, daß die Kragen (74, 78) und die zwischen ihnen liegende Gummifederanordnung (76) sphärisch gewölbt sind.

## Claims

1. A vibration damping, torsionally elastic shaft coupling, especially for a motor vehicle power train, comprising
- first and second flanges (10, 20) designed to be secured to a shaft (12, 22) each,
- a flexible disc (30) disposed between the two flanges (10, 20) and alternately fixed at angular spacings to one each of said flanges,
- a torsional vibration suppressor (40) comprising a suppressor collar (42) rigidly connected to the second flange (20), a gyrating mass (46), and a rubber spring system (48) adhering to the suppressor collar (42) and the gyrating mass (46), especially by vulcanisation, and
- a centering device (50) comprising a centering collar (78) rigidly connected to the second flange (20), a centering body (56) rigidly connected to the first flange (10), and a rubber spring system (58) adhering to the centering collar (78), especially by vulcanisation,
characterised in that
- the second flange (20) is divided into a primary portion (70) and a secondary portion (72) which are interconnected by a rubber spring system (76),
- the primary portion (70) is designed to be secured to the associated shaft (22) and comprises at least one of the collars (42, 78), and
- the secondary portion (72) is connected through the flexible disc (30) to the first flange (10).

2. The shaft coupling according to claim 1,
characterised in that
- the primary portion (70) and the secondary portion (72) each comprise a collar (74 and 78, respectively), and
- the rubber spring system (76) lies between these collars (74, 78).

3. The shaft coupling according to claim 2,
characterised in that the collars (74, 78) and the rubber spring system (76) located between them are cylindrical.

4. The shaft coupling according to claim 2,
characterised in that the collars (74, 78) and the rubber spring system (76) located between them are spherically arched.

## Revendications

1. Joint universel élastique en torsion amortisseur d'oscillations, en particulier pour la transmission de véhicules automobiles, comprenant
- une première et une deuxième brides (10, 20) qui sont conçues pour la fixation de chacune sur un arbre respectif (12, 22),
- un disque d'articulation (30), qui est disposé entre les deux brides (10, 20) et est fixé alternativement avec espacements angulaires à chacune d'elles,
- un amortisseur d'oscillations en rotation (40) qui présente une collerette d'amortissement (42), liée de façon rigide à la deuxième bride (20), une masse mobile (46) et un dispositif élastique en caoutchouc (48) lié à la collerette d'amortissement (42) et à la masse mobile (46), en particulier vulcanisé, et
- un dispositif de centrage (50) qui présente un collier de centrage (78) lié de façon rigide à la deuxième bride (20), un corps de centrage (56) lié de façon rigide à la première bride (10) et un dispositif élastique en caoutchouc (58) adhérant au collier de centrage (78), en particulier vulcanisé,
caractérisé en ce que
- la deuxième bride (20) est subdivisée en une partie primaire (70) et une partie secondaire (72) qui sont reliée entre elles par un dispositif élastique en caoutchouc (76),
- le partie primaire (70) est conçue pour être fixée à l'arbre correspondant (22) et présente au moins une des collerettes (42, 78), et
- la partie secondaire (72) est liée à la première bride (10) par l'intermédiaire du disque d'articulation (30).

2. Joint universel selon la revendication 1,
caractérisé en ce que
- la partie primaire (70) et la partie secondaire (72) présentent chacune une collerette (74, respectivement 78) et
- le dispositif élastique en caoutchouc (76) se trouve entre ces collerettes (74, 78).

3. Joint universel selon la revendication 2,
caractérisé en ce que les collerettes (74, 78) et le dispositif élastique en caoutchouc (76) qui se trouve entre celles-ci sont cylindriques.

4. Joint universel selon la revendication 2,
caractérisé en ce que les collerettes (74, 78) et le dispositif élastique en caoutchouc (76) qui se trouve entre celles-ci sont bombés de façon sphérique.
